# EUROPÄISCHE PATENTSCHRIFT

(11) **EP 2 964 972 B1**
(45) Veröffentlichungstag und Bekanntmachung des Hinweises auf die Patenterteilung: **03.07.2019**
(21) Anmeldenummer: 13830034.8
(22) Anmeldetag: 20.12.2013
(51) Int. Cl.: F16F 9/53

(54) **SCHWINGUNGSDÄMPFER**
VIBRATION DAMPER
AMORTISSEUR DE VIBRATIONS

(30) Priorität: 07.03.2013 DE 102013003841
(43) Veröffentlichungstag der Anmeldung: 13.01.2016
(73) Patentinhaber: Hitachi Automotive Systems Europe GmbH, 85445 Schwaig-Oberding (DE)
(72) Erfinder: FUNKE, Joachim, Dr-Ing., 64853 Otzberg (DE); BRUNS, Matthias, 65191 Wiesbaden (DE); HERRMANN, Nils, 64732 Bad König (DE); JOHNSTON, Lucien, 60389 Frankfurt am Main (DE); ADAMS, Dorothea, 64572 Büttelborn (DE)
(74) Vertreter: Völger, Karl Wolfgang
(86) Internationale Anmeldenummer: PCT/EP2013/003893
(87) Internationale Veröffentlichungsnummer: WO 2014/135183

(56) Entgegenhaltungen:
- EP-A2- 0 261 427
- DE-A1-102010 013 566
- JP-A- H0 658 364

## Beschreibung

Die Erfindung betrifft einen Schwingungsdämpfer zur Dämpfung von Ein- und Ausfederkräften an Kraftfahrzeugen gemäß dem Oberbegriff des Patentanspruchs 1.

Schwingungsdämpfer dienen in Kraftfahrzeugen dazu, dass die Schwingungen des Fahrwerks als gefederte Massen schnell abklingen, um die Fahrstabilität sicherzustellen und einen gewünschten Fahrkomfort zu schaffen. Dazu werden meist hydraulische Schwingungsdämpfer eingesetzt, bei denen in einem mit Öl befüllten Zylinder ein axial verschiebbarer Kolben geführt ist. Am Kolben ist eine Kolbenstange angeordnet, die nach oben aus dem Zylinder abgedichtet herausgeführt ist und am Fahrzeugchassis befestigt wird. Andererseits ist der Zylinder mit seinem unteren Ende vorzugsweise an einem Rad- oder Achsteil angebracht. Der Kolben unterteilt dabei den Zylinder in eine obere Ausfahrkammer und eine untere Einfahrkammer, die über mindestens ein Drosselventil miteinander verbunden sind. Zum Ausgleich einer einsinkenden Kolbenstange ist die Einfahrkammer zusätzlich noch mit einer Gasdruckkammer verbunden, in der ein Vordruck von ca. 20 bis 30 bar eingegeben ist, um eine Kavitation zu vermeiden. Zur Regelung oder Steuerung der Dämpferkräfte können die Drosselventile elektromagnetisch verstellbar ausgebildet sein, um das Fahrverhalten eines Fahrzeugs an eine vorgegebene Schwingungsdämpfung und/oder einen gewünschten Fahrkomfort anpassen zu können. Allerdings sind derartige Drosselventile relativ langsam in ihrem Regelverhalten, so dass häufig schnelle Schwingungsänderungen nicht schnell genug gedämpft werden können.

Aus der DE 10 2007 026 378 A1 ist ein Schwingungsdämpfer für Kraftfahrzeuge bekannt, der mit einem elektrorheologischen Drosselventil ausgeführt ist und dadurch eine sehr schnelle Schwingungsregelung ermöglicht. Dabei ist um das Zylinderinnenrohr ein beabstandetes Elektronenrohr angeordnet, das mit dem Zylinderinnenrohr einen Drosselspalt bildet. Der Drosselspalt ist dabei sowohl mit der Einfahr- als auch mit der Ausfahrkammer verbunden, wobei die Viskosität der durch den Drosselspalt fließenden elektrorheologischen Flüssigkeit über eine Hochspannung zwischen dem Elektrodenrohr und dem Zylinderinnenrohr steuerbar ist. Allerdings weist dieser Schwingungsdämpfer zum Volumenausgleich der Kolbenstange einen zusätzlichen pneumatischen Druckmittelzylinder mit einem weiteren Kolben auf, der axial mit dem Hydraulikzylinder als sogenannter Einrohrdämpfer verbunden ist. Dadurch verlängert sich der Schwingungsdämpfer nicht unbeträchtlich, was zu Einbauproblemen führen kann.

Ein weiterer elektrorheologischer Schwingungsdämpfer ist aus der EP 0 261 427 B1 bekannt, der als sogenannter Zweirohrdämpfer ausgebildet ist. Der Stoßdämpfer besteht dabei aus einem Zylinderinnerohr, um das koaxial drei weitere beabstandete Zylinderrohre als Elektroden angeordnet sind, die um das Zylinderinnenrohr drei Ventilspalte bilden. Koaxial zu den Elektrodenrohren ist noch ein weiteres beabstandetes Außenrohr angeordnet, das zur Ausfahrkammer abgedichtet und mit der Einfahrkammer über ein beim ausfahrenden Kolben öffnendes Rückschlagventil verbunden ist und eine pneumatische Gasdruckkammer bildet. Da die Drosselspalte unten mit der Gasdruckkammer und oben mit der Ausfahrkammer verbunden sind und dies ein System der kommunizierenden Röhren darstellt, kann es insbesondere nach längeren Standzeiten dazu kommen, dass ein Teil des gasförmigen Druckmittels von der Gasdruckkammer über die Drosselspalte in die Ausfahrkammer gelangt und die Schwingungsdämpfung ungünstig beeinflusst.

Desweiteren bewirkt der Zweirohrdämpfer auch durch die drei radial nebeneinander angeordneten Drosselspalte einen verhältnismäßig großen Außendurchmesser, so dass ein derartiger Einbauraum z. B. innerhalb von Schraubenfedern häufig nicht zur Verfügung steht.

Der Erfindung liegt deshalb die Aufgabe zugrunde, einen Schwingungsdämpfer der eingangs genannten Art so zu verbessern, dass er mit kompakten Außenabmessungen ausführbar ist und eine gleichbleibend gute und schnelle Schwingungsdämpfung bewirkt.

Diese Aufgabe wird durch die im Patentanspruch 1 angegebene Erfindung gelöst. Weiterbildungen und vorteilhafte Ausführungsbeispiele der Erfindung sind in den Unteransprüchen angegeben.

Die Erfindung hat den Vorteil, dass durch das Rückschlagventil zwischen der Ausfahrkammer und der Gasdruckkammer ein in die Ausfahrkammer oder die Drosselspalte eingedrungenes gasförmiges Druckmittel schnell wieder zur Gasdruckkammer zurückgeleitet wird, wodurch die gewünschte Schwingungsdämpfung mittels der elektrorheologischen Flüssigkeit langfristig erhalten bleibt. Gleichzeitig wird dadurch die Gefahr vermindert, dass durch ein gasförmiges Druckmittel in den Ventilspalten es zu Spannungsüberschlägen zwischen den Elektrodenpolen kommt.

Die Erfindung hat weiterhin den Vorteil, dass durch die Bildung von Ventilteilspalten zwischen dem Zylinderinnenrohr und dem Elektrodenrohr mittels Dichtmitteln eine Zentrierung der Rohre erreicht wird, wodurch sich auch die Genauigkeit der Spalthöhen verbessern lässt. Dadurch erhöht sich gleichzeitig die Genauigkeit der Schwingungsdämpfung, da bei gleichbleibender Spalthöhe eine gleichbleibende Viskosität über die gesamte Spaltlänge steuerbar ist. Dies wird insbesondere durch die schraubenwendelförmigen Dichtmittel als Doppelhelix erreicht, weil diese die Spaltlängen erhöhen, die zur Viskositätssteuerung zur Verfügung steht.

Desweiteren wird durch den kraftschlüssigen Einsatz der Dichtmittel zwischen dem Zylinderinnenrohr und dem Elektrodenrohr eine höhere mechanische Steifigkeit des Schwingungsdämpfers bei geringen Wanddicken der einzelnen Rohre erreicht.

Bei einer besonderen Ausbildung der Erfindung ist zusätzlich vorgesehen, dass Elektrodenrohr auf seiner äußeren Mantelfläche mit einer elektrischen Isolationsschicht oder einem Isolationslack zu versehen, was den Vorteil hat, dass dadurch nur eine verhältnismäßig geringe Steuerenergie notwendig ist, weil kaum Steuerenergie nach außen abgestrahlt wird.

Bei einer weiteren besonderen Ausbildung der Erfindung ist am Schwingungsdämpfer eine elektronische Steuerschaltung als Hochvoltelektronik vorgesehen, die aufgrund der Standzeit und des zuletzt zurückgelegten Dämpferwegs den für die vorgegebenen Dämpfung notwendigen Steuerspannungswert errechnet, wodurch der Vorteil entsteht, dass dadurch der Stromanstieg begrenzbar und gleichzeitig ein Spannungsüberschlag vermindert und ein übermäßiger Temperaturanstieg im Drosselspalt vermieden wird.

Die Erfindung wird anhand eines Ausführungsbeispiels, das in der Zeichnung dargestellt ist, näher erläutert. Es zeigen:
- Fig. 1:: einen schematisch dargestellten elektrorheologischen Schwingungsdämpfer;
- Fig. 2:: ein Ausschnitt eines Zylinderinnenrohrs mit zwei helixförmigen Abdichtwendeln, und
- Fig. 3:: ein Ausschnitt des Schwingungsdämpfers mit einem Rückschlagventil zwischen der Ausfahrkammer und der Gasdruckkammer.

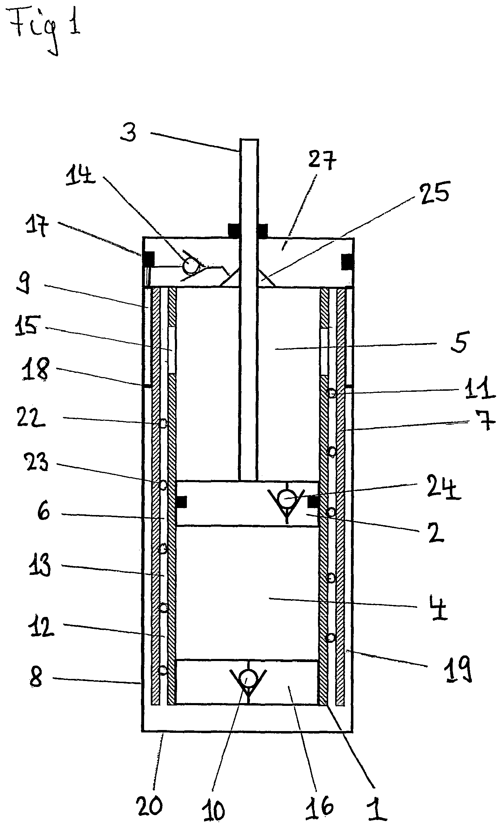

In Fig. 1 der Zeichnung ist ein steuerbarer hydraulischer Schwingungsdämpfer mit elektrorheologischer Flüssigkeit schematisch dargestellt, der als Stoßdämpfer für ein Kraftfahrzeug als sogenannter Zweirohrdämpfer ausgebildet ist. Dieser Schwingungsdämpfer enthält ein Zylinderinnenrohr 1, in dem ein axial verschiebbarer Kolben 2 angeordnet ist, an den eine in Einbaulage nach oben ausfahrbare Kolbenstange 3 befestigt ist. Dabei unterteilt der Kolben 2 das Zylinderinnenrohr 1 in eine obere Ausfahrkammer 5 und eine untere Einfahrkammer 4, in denen als hydraulisches Druckmittelmittel eine elektrorheologische Flüssigkeit eingefüllt ist. Koaxial zum Zylinderinnenrohr 1 ist ein beabstandetes Elektrodenrohr 7 vorzugsweise aus Aluminiummaterial angeordnet, das zum Zylinderinnenrohr 1 einen ringförmigen Spalt als Drosselspalt 6 aufweist. Der Drosselspalt 6 ist an seinem oberen Ende durch eine Bohrung 15 im Zylinderinnenrohr 1 mit der Ausfahrkammer 5 und durch ein drittes Rückschlagventil 10 als Bodenventil im Zylinderinnendeckel 16 des Zylinderinnenrohrs 1 mit der Einfahrkammer 4 verbunden. Koaxial um das Elektrodenrohr 7 ist noch ein beabstandetes Außenrohr 8 angeordnet, dessen oberer Teil eine Gasdruckkammer 9 darstellt, in die ein mit geringem Überdruck von ca. 2 bis 3 bar versehenes pneumatisches Druckmittel eingefüllt ist. Die Gasdruckkammer 9 ist in deren oberen Teil durch eine Ringdichtung 17 zwischen dem Elektrodenrohr 3 , einem oberen Zylinderdeckel 27 und dem Außenrohr 8 abgedichtet.

Im unteren Bereich wird die Gasdruckkammer 9 durch die Höhe der elektrorheologischen Flüssigkeit begrenzt, deren Pegelstand 18 im äußeren Ringraum 19 zwischen dem Außenrohr 8 und dem Elektrodenrohr 3 von der jeweiligen Kolbenstellung abhängt. Zur Abdichtung des Schwingungsdämpfers ist im unteren Bereich ein unterer Zylinderdeckel 20 am Außenrohr 8 angebracht, der den äußeren Ringraum 9 nach außen verschließt.

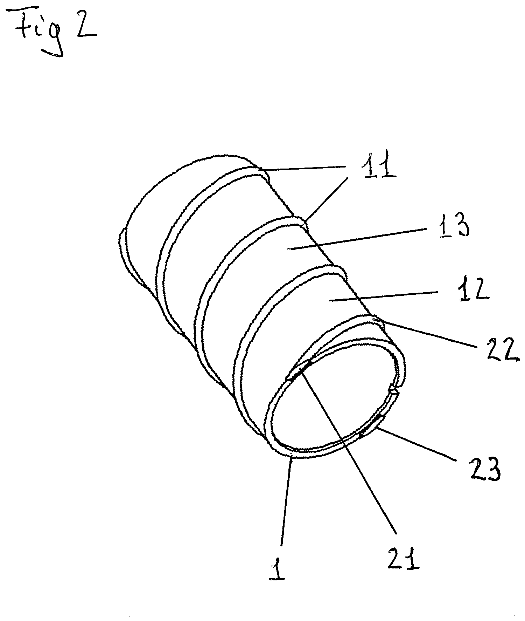

Der zwischen dem Zylinderinnenrohr 1 und dem Elektrodenrohr 7 belassene Drosselspalt 7 ist durch zwei schraubenwendelförmig angeordnete Spaltabdichtungen 21, 22 in zwei als Doppelhelix ausgeformte gleichartige Ventilteilspalte 12, 13 unterteilt. Dazu sind zwischen dem Elektrodenrohr 7 und dem Zylinderinnenrohr 1 zwei um 180° versetzt angeordnete Spaltdichtungen 22, 23 als Dichtmittel 11 angeordnet, die im einzelnen in Fig. 2 der Zeichnung näher dargestellt sind.

Die Fig. 2 der Zeichnung zeigt einen Teil des Zylinderinnenrohrs 1, in das zwei schraubenwendelförmige Nuten 21 eingefräst sind, die eine vorgegebene Steigung aufweisen und voneinander einen gleichmäßigen axialen Abstand aufweisen und eine Doppelhelix darstellen. In diese beiden Nuten 21 werden jeweils eine erste Spaltabdichtung 22 und in die um 180° versetzt angeordnete zweite Nut 21 eine.zweite Spaltabdichtung 23 eingelegt oder eingegossen. Diese Spaltabdichtungen 22, 23 sind vorzugsweise aus einem elastomeren Kunststoff- oder Gummimaterial und ragen über die äußere Mantelfläche des Zylinderinnenrohrs 1 um eine vorgegebene Spalthöhe heraus. Dadurch entstehen zwischen dem Zylinderinnenrohr 1 und dem darauf aufschiebbaren Elektrodenrohr 7 zwei gegeneinander abgedichtete Ventilteilspalte 12, 13, die jeweils ein Drosselventil bilden, durch das die elektrorheologische Flüssigkeit von der Ausfahrkammer 5 in die Einfahrkammer 4 strömen kann. Die Spaltabdichtungen 22, 23 könnten aber gleichfalls auch in gleichartige Nuten oder durchdringenden Spalten im Innenbereich des Elektrodenrohrs 7 angeordnet sein, in das dann das Zylinderinnenrohr 1 koaxial einschiebbar ist. Durch derartige schraubenwendelförmige Spaltabdichtungen 22, 23 wird gleichfalls der Durchströmweg in den Drosselventilen verlängert, wodurch die Steuerungsmöglichkeit verbessert wird.

Die Spaltabdichtungen 22, 23 können aber auch linear abgeordnet werden wodurch dann zwei parallele Drosselspalte gebildet werden. Zur Verbesserung der Zentrierung können zwischen dem Zylinderinnenrohr 1 und dem Elektrodenrohr 7 aber auch mehr als nur zwei Ventilteilspalte 12, 13 zum Beispiel als Dreifachhelix angeordnet werden.

Zur Vermeidung eines hohen Vordrucks in der Gasdruckkammer 9 ist zusätzlich im Kolben 2 noch ein zur Ausfahrkammer 5 öffenbares zweites Rückschlagventil 24 vorgesehen, durch das die elektrorheologische Flüssigkeit beim Einfahren des Kolbenstange 3 von der Einfahrkammer 4 in die Ausfahrkammer 5 strömt, wobei dann das einfahrende Kolbenstangenvolumen über die Drosselspalte 12, 13 zum äußeren Ringraum 19 gelangt und den Pegelstand 18 dort erhöht.

Da bei längeren Standzeiten durch das Prinzip der kommunizierenden Röhren und anderen Betriebszuständen über die Ventilteilspalte 12, 13 auch Gasbläschen aus der Gasdruckkammer 9 in die Ausfahrkammer 5 gelangen können, ist am obersten Punkt der Ausfahrkammer 5 im Beriech des oberen Zylinderdeckels 27 oder einem damit in Verbindung stehenden Ringteil ein Gassammelraum 25 vorgesehen, der mit einem speziell gedrosselten ersten Rückschlagventil 14 verbunden ist, das ausgangseitig in die Gasdruckkemmer 9 mündet.

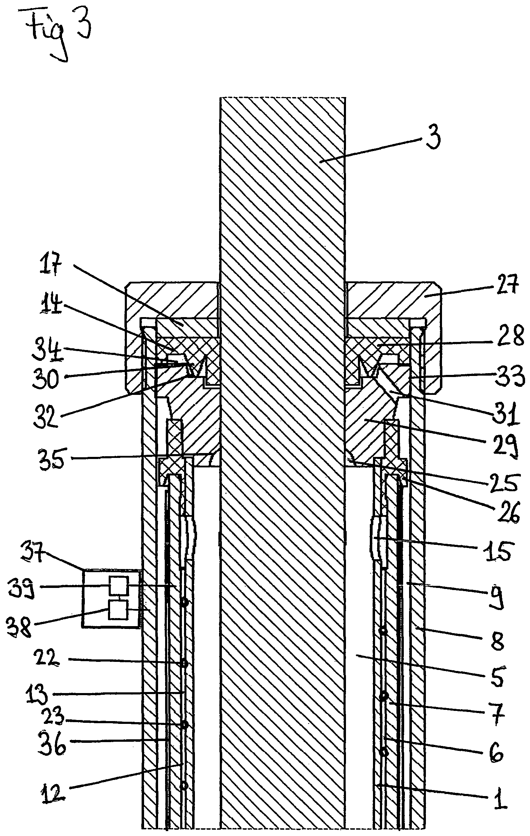

Die Ausführung dieses ersten Rückschlagventils 14 ist in Fig. 3 der Zeichnung näher dargestellt, die ein Schnittbild des oberen Schwingungsdämpferteils zeigt. Das gedrosselte erste Rückschlagventil 14 besteht dabei aus einem ringförmigen Ventiloberteil 28 und einem ringförmigen Ventilunterteil 29, die koaxial zur Kolbenstange 3 unterhalb der Ringdichtung 17 im oberen Zylinderdeckel 27 angeordnet sind. Dabei ist das Ventiloberteil 28 vorzugsweise aus einem abdichtenden Elastomer, das oben dichtend an der Ringdichtung 17 und mit seiner zentralen Bohrung dichtend an der Kolbenstange 3 anliegt und eine nach unten gerichtete elastische ringförmige Dichtlippe 30 aufweist, deren Spitze abdichtend auf einer horizontalen Ringfläche 32 des Ventilunterteils 29 dichtend aufsteht. Das Ventilunterteil 29 ist ebenfalls ringförmig ausgebildet und besteht vorzugsweise auch aus einem gleitfähigen Metall wie z. B. Messing, der mit seiner äußeren Mantelfläche 33 innen am Außenrohr 8 anliegt. Unterhalb der äußeren Mantelfläche 33 liegt das Ventilunterteil 29 abdichtend an einer ringförmigen Elektrodenhalterung 26 an, die das Elektrodenrohr 7 elektrisch isolierend von dem als Gegenelektrode geschalteten Zylinderinnenrohr 1 trennt und die Ventilteilspalte 12, 13 zwischen dem Elektrodenrohr 7 und dem Zylinderinnenrohr 1 gegenüber der Gasdruckkammer 9 abdichtet.

Koaxial zur Elektrodenhalterung 26 beginnt der obere Teil der Gasdruckkammer 9, die über eine schräge Verbindungsbohrung 31 mit dem Ventilinnenraum 34 verbunden ist, der Ventilinnenraum 34 zwischen dem Ventiloberteil 28 und dem Ventilunterteil 29 belassen ist. Zwischen dem Ventilinnenraum 34 und dem Gassammelraum 25 liegt der Ventilunterteil 29 in drucklosem Zustand leicht gleitend an der Kolbenstange 3 an und bildet mit dieser einen dünnen Gleitspalt, der zwar Gasbläschen durchlässt, aber für ein Fluid zu schmal ist und daher einen Drosselspalt bildet. Im drucklosen Zustand sammeln sich häufig nach längeren Standzeiten oder anderen Betriebszuständen Gasbläschen aus den Drosselspalten 12, 13 an der höchsten Stelle im Gassammelraum 25. Wird nun der Schwingungsdämpfer betätigt, steigt dadurch der Druck in der Ausfahrkammer 5 an, so dass durch die schräge oder abgerundete Begrenzungsfläche 35 am Ventilunterteil 29 im Bereich des Gassammelraums 25 ein kleiner Durchtrittsspalt als Drosselspalt entlang der Kolbenstangenaußenfläche zum Ventilinnenraum 34 gebildet wird, in den sich dann der Überdruck mit den Gasbläschen erstreckt. Dadurch wird die Dichtlippe 30 radial nach außen gedrückt und gibt den Weg für die Gasbläschen zur Verbindungsbohrung 31 frei. Sobald der Druck in der Gasdruckkammer 9 den Druck in der Ausfahrkammer 5 erreicht, schließt die Dichtlippe 30 des gedrosselten ersten Rückschlagventils 14, so dass die nachfolgende elektrorheologische Flüssigkeit nicht entweichen kann. Dadurch wird stets die in der Ausfahrkammer 5 gesammelte pneumatische Druckmittelmenge nach wenigen Kolbenbewegungen wieder in die Gasdruckkammer 9 zurückgeleitet, so dass das pneumatische Druckmittel die Dämpfungskraft des Schwingungsdämpfers nicht beeinträchtigen kann.

Zur Ansteuerung des Schwingungsdämpfers mit einer Hochspannung ist vorzugsweise im Außenrohr 8 noch eine Hochvoltelektronik 37 angeordnet, die mindestens ein steuerbares Hochspannungsnetzteil 39 und eine programmgesteuerte Elektronikschaltung 38 enthält. Dabei bildet das steuerbare Hochspannungsnetzteil 39 aus der Fahrzeugspannung eine Hochspannung, die je nach Spalthöhe etwa einen Hochspannungswert von ca. 5000 V/mm aufweist, um eine maximale Dämpfungskraft zu erzeugen. Um eine genaue Durchflusssteuerung in den Ventilteilspalten 12, 13 zu ermöglichen, muss auch sichergestellt werden, dass im Betriebszustand keine Spannungsüberschläge zwischen dem Elektrodenrohr 7 und dem als Gegenelektrode geschalteten Zylinderinnenrohr 1 entstehen, was vorzugsweise dann auftritt, wenn Gasbläschen des pneumatischen Druckmittels sich in den Ventilteilspalten 12, 13 befinden. Ein derartiger Fall tritt beim Zweirohrdämpfer häufig nach langen Stillstandszeiten auf, weil er sich nach dem Prinzip der kommunizierenden Röhren auf einen gleichmäßigen Pegelstand ausrichtet. Deshalb erfasst die programmgesteuerte Elektronikschaltung 38 zusätzlich die Stillstandszeit, die Temperatur der elektrorheologischen Flüssigkeit und den vor dem Stillstand zurückgelegten Kolbenweg. Da derartige Gasbläschen nach kurzer Betätigung des Schwingungsdämpfers in die Ausfahrkammer 5 gelangen, wird zunächst die vorgesehene Hochspannung langsam ansteigend gesteuert, indem in dieser Einfahrphase die Elektronikschaltung 38 aus den vorgegebenen Kennlinienverläufen die ansteigende Steuerspannung errechnet, nach der ein Spannungsüberschlag in dieser Phase vermeidbar ist. Da dies ebenfalls noch von der Fluidtemperatur abhängig ist, wird auch die erfasste Temperatur bei der Spannungsberechnung berücksichtigt. Daraus wird für den Anfahrtsweg des Schwingungsdämpfers eine Hochspannung berechnet und das Hochspannungsnetzteil 39 entsprechend gesteuert, so dass an dem Elektrodenrohr 7 eine optimierte Hochspannung anliegt, die die gewünschte Dämpferkraft steuert, ohne dass es zu Spannungsüberschlägen führt.

Gleichzeitig wird durch die Elektronikschaltung 38 auch ein möglicher unzulässiger Stromanstieg überwacht, der ein Indiz für einen Spannungsüberschlag darstellen kann. Dazu sind in der Elektronikschaltung 38 Kennlinienverläufe eingegeben, die den Steuerstromsollwerten entsprechen und die jeweils mit den erfassten Istwerten verglichen werden und bei einer Überschreitung eines vorgegebenen Grenzwertes die gesteuerte Hochspannung verringert wird. Dadurch können eventuelle Spannungsüberschläge gelöscht werden, wodurch sich dann wieder der Sollwertverlauf einstellt.

Desweiteren wird zur Begrenzung der Steuerenergie das Elektrodenrohr 7 außen mit einer Isolationsbeschichtung oder einem Isolationslack 36 versehen, um die Abstrahlung nach außen, insbesondere in den äußeren Ringraum 19 zu verringern.

Hierdurch kann insbesondere die Dimensionierung des Hochspannungsnetzteils 39 verringert werden, wodurch dieses einfacher und kompakter ausführbar ist.

Der vorstehend beschriebene Schwingungsdämpfer arbeitet im Fahrbetrieb wie folgt:
Bei über die Achse eingeleiteten Fahrschwingungen wird beim Ausfedern das Außenrohr 8 nach unten bewegt, so dass auf die obere Kolbenfläche durch die in der Ausfahrkammer 5 befindliche elektrorheologische Flüssigkeit als Druckmittel ein Druck ausgeübt wird. Dadurch strömt die in der Ausfahrkammer 5 befindliche elektrorheologische Flüssigkeit über die Bohrungen 15 und die Ventilteilspalte 12, 13 in den äußeren Ringraum 19 und über das Bodenventil 10 in die Einfahrkammer 4. Dabei bewegt sich der Kolben 2 mit seiner Kolbenstange 3 vertikal nach oben in die Ausfahrkammer 5, wodurch die ausströmende elektrorheologische Flüssigkeit und gleichzeitig der Volumenanteil der Kolbenstange 3 aus dem äußeren Ringraum 19 über das Bodenventil 10 in die Einfahrkammer 4 gelangt. Dadurch sinkt auch der Pegelstand im äußeren Ringraum 19, wodurch sich gleichzeitig die Gasdruckkammer 9 durch ihren Vordruck ausdehnt. Dabei verhält sich die elektrorheologische Flüssigkeit im unbeeinflussten also spannungsfreien Zustand wie eine Hydraulikflüssigkeit, so dass ein derartiger Schwingungsdämpfer ohne Steuerspannung im Grunde wie ein herkömmlicher hydraulischer Stoßdämpfer arbeitet.

Die Dämpfungswirkung eines derartigen Stoßdämpfers kann nun zusätzlich durch die Anlegung einer Steuerhochspannung an das Elektrodenrohr 7 erhöht werden, wodurch sich die Viskosität der elektrorheologischen Flüssigkeit entsprechend verändert. Denn durch die Anlegung einer Steuerspannung wird ein elektrisches Feld erzeugt, durch das die Viskosität der elektrorheologischen Flüssigkeit beliebig erhöht werden kann. Deshalb wird vorzugsweise der Schwingungsdämpfer so gesteuert, dass bei hohen Einfedergeschwindigkeiten entsprechend einer vorgegebenen Einfederkennlinie die Spannung so weit erhöht wird, dass die Radschwingungen gegenüber dem Fahrzeugchassis entsprechend gedämpft werden. Da durch die Einfederschwingung eine Kraft auf das Fahrzeugchassis übertragen wird, entsteht in dessen Folge auch eine Ausfederschwingung, die auch entsprechend gedämpft werden kann.

## Patentansprüche

1. Schwingungsdämpfer zur Dämpfung von Ein- und/oder Ausfederkräften an Kraftfahrzeugen, der einen Druckmittelinnenzylinder (1) enthält, in dem ein Kolben (2) mit einer Kolbenstange (3) axial verschiebbar angeordnet ist, der den Druckmittelinnenzylinder (1) in eine Einfahrkammer (4) und eine Ausfahrkammer (5) unterteilt, in denen als Druckmittel eine elektrorheologische Flüssigkeit enthalten ist, wobei die Einfahrkammer (4) und die Ausfahrkammer (5) durch mindestens einen Drosselspalt (6) zwischen dem Zylinderinnenrohr (1) und einem koaxial dazu angeordneten Elektrodenrohr (7) verbunden ist und dass das Elektrodenrohr (7) koaxial von einem beabstandeten weiteren Außenrohr (8) umgeben ist, das mit dem Elektrodenrohr (7) eine Gasdruckkammer (9) bildet, die über ein Bodenventil (10) mit der Einfahrkammer (4) verbunden ist, **dadurch gekennzeichnet, dass** zwischen dem Zylinderinnenrohr (1) und dem Elektrodenrohr (7) mindestens zwei axial lineare oder schraubenwendelförmige Dichtmittel (11) angeordnet sind, die den Drosselspalt (6) in mindestens zwei gleichartige Ventilteilspalte (12, 13) unterteilen und dass zwischen der Ausfahrkammer (5) und der Gasdruckkammer (9) ein zur Gasdruckkammer (9) öffnendes erstes gedrosseltes Rückschlagventil (14) angeordnet ist.

2. Schwingungsdämpfer nach Anspruch 1, **dadurch gekennzeichnet, dass** das Zylinderinnenrohr (1) am Ende der Einfahrkammer (4) durch einen Zylinderinnendeckel (16) verschlossen ist und dass das Bodenventil (10) als ein zur Einfahrkammer (4) öffnendes drittes Rückschlagventil ausgebildet ist.

3. Schwingungsdämpfer nach Anspruch 1 oder 2, **dadurch gekennzeichnet, dass** das Dichtmittel (11) in mindestens zwei schraubenwendelförmige Nute (21) oder Spalte an der inneren Mantelfläche des Elektrodenrohrs (7) befestigt ist und aus einem erhabenen Elastomer aus einem Gummi- oder Kunststoffmaterial besteht und mindestens eine erste Spaltabdichtung (22) und eine zweite Spaltabdichtung (23) zwischen dem Elektrodenrohr (7) und dem Zylinderinnenrohr (1) bildet.

4. Schwingungsdämpfer nach einem der vorhergehenden Ansprüche, **dadurch gekennzeichnet, dass** zwischen der Ausfahrkammer (5) und der Einfahrkammer (4) ein zur Ausfahrkammer (5) öffnendes zweites Rückschlagventil (24) angeordnet ist.

5. Schwingungsdämpfer nach einem der vorhergehenden Ansprüche, **dadurch gekennzeichnet, dass** das erste gedrosselte Rückschlagventil (14) im Bereich eines oberen Zylinderdeckels (27) angeordnet ist und aus einem ringförmigen Ventiloberteil (28) und einem ringförmigen Ventilunterteil (29) besteht, zwischen denen ein Ventilinnenraum (34) belassen ist und die koaxial zur Kolbenstange (2) angeordnet sind, wobei das Ventilunterteil (29) durch seine äußeren Mantelflächen (33) die Ausfahrkammer (5) gegenüber der Gasdruckkammer (9) und das Ventiloberteil (28) durch seine äußeren und inneren Mantelflächen die Gasdruckkammer (9) nach außen abdichtet.

6. Schwingungsdämpfer nach Anspruch 5, **dadurch gekennzeichnet, dass** das Ventilunterteil (29) zur Ausfahrkammer (5) eine nach außen gerichtete abfallende schräge Begrenzungsfläche (25) aufweist, die koaxial zur Kolbenstange (2) einen Gassammelraum (25) in der Ausfahrkammer (5) bildet, wobei dieses aus einem gleitfähigen Metall besteht und koaxial zur Kolbenstange (3) einen schmalen Drosselspalt bildet.

7. Schwingungsdämpfer nach Anspruch 5 oder 6, **dadurch gekennzeichnet, dass** das Ventiloberteil (28) eine nach unten gerichtete ringförmige elastische Dichtungslippe (30) aufweist, die mindestens im drucklosen Zustand auf einer horizontalen Ringfläche (32) des Ventilunterteils (29) dichtend aufliegt und das im Ventilunterteil (29) zwischen der Gasdruckkammer (9) und dem Ventilinnenraum (34) mindestens eine Verbindungsbohrung (31) angeordnet ist.

8. Schwingungsdämpfer nach einem der vorhergehenden Ansprüche, **dadurch gekennzeichnet, dass** das Elektrodenrohr (7) auf seiner äußeren Mantelfläche eine isolierende Lackschicht (35) oder eine Isolationsbeschichtung aufweist, die so ausgebildet ist, dass sie das elektrische Feld nach außen abschirmt.

9. Schwingungsdämpfer nach einem der vorhergehenden Ansprüche, **dadurch gekennzeichnet, dass** am Außenrohr (8) eine Hochvoltelektronikschaltung (37) angeordnet ist, die druckdicht und elektrisch mit dem Elektrodenrohr (7) und elektrisch mit dem Außenrohr (8) verbunden ist und deren Hochspannung durch eine programmgesteuerte Elektronikschaltung (38) gesteuert wird.

10. Schwingungsdämpfer nach Anspruch 9, **dadurch gekennzeichnet, dass** die Elektronikschaltung (38) so ausgebildet ist, dass sie eine Stillstandszeit, die Temperatur der elektrorheologischen Flüssigkeit und den nach dem Stillstand zurückgelegten Kolbenstangenweg erfasst und daraus eine nach einem Kennlinienverlauf vorgegebene ansteigende Hochspannung berechnet und steuert, durch die ein Spannungsüberschlag zwischen dem Elektrodenrohr (7) und dem Zylinderinnenrohr (1) verhinderbar ist.

11. Schwingungsdämpfer nach Anspruch 9 oder 10, **dadurch gekennzeichnet, dass** die Elektronikschaltung (38) nach der Stillstandszeit den Istwert des Stromanstiegs erfasst und diesen mit einem vorgegebenen Sollwertverlauf vergleicht und beim Überschreiten eines vorgegebenen Grenzwerts die Hochspannung soweit verringert, bis der Istwert dem SollWertverlauf folgt.

## Claims

1. A vibration damper for damping spring retraction and/or spring extension forces on motor vehicles, comprising: an inner pressure medium cylinder (1), a piston (2) with a piston rod (3) axially slidably arranged in the inner pressure medium cylinder (1), wherein the piston (2) divides the inner pressure medium cylinder (1) into a retraction chamber (4) and an extension chamber (5), in which as a pressure medium an electrorheological fluid is contained, wherein the retraction chamber (4) and the extension chamber (5) are connected by at least one throttle gap (6) between the inner pressure medium cylinder (1) and an electrode tube (7) coaxially arranged around the inner pressure medium cylinder (1), and wherein an outer tube (8) coaxially surrounds and is spaced-apart from the electrode tube (7), wherein the outer tube (8) together with the electrode tube (7) form a gas pressure chamber (9), which is connected through a bottom valve (10) with the retraction chamber (4), **characterised in that** at least two axially linear or helically shaped seal means (11) arranged between the inner pressure medium cylinder (1) and the electrode tube (7), wherein the seal means (11) divide the throttle gap (6) into at least two similar valve partial gaps (12, 13), and **in that** a first throttled non-return valve (14) opens toward the gas pressure chamber (9) and is arranged between the extension chamber (5) and the gas pressure chamber (9).

2. Vibration damper according to claim 1, **characterised in that** the inner pressure medium cylinder (1) is closed by an inner cylinder lid (16) at an end of the retraction chamber (4), and **in that** the bottom valve (10) is embodied as a third non-return valve which opens toward the retraction chamber (4).

3. Vibration damper according to claim 1 or 2, **characterised in that** the seal means (11) is secured in at least two helically shaped grooves (21) or gaps on an inner circumferential surface of the electrode tube (7) and consists of an elastomer of a rubber or synthetic plastic material, and forms at least one first gap seal (22) and one second gap seal (23) between the electrode tube (7) and the inner pressure medium cylinder (1).

4. Vibration damper according to one of the preceding claims, **characterised in that** between the extension chamber (5) and the retraction chamber (5) a second non-return valve (24) is arranged which opens toward the extension chamber (5)

5. Vibration damper according to one of the preceding claims, **characterised in that** the first throttled non-return valve (14) is arranged in an area of an upper cylinder lid (27) and consists of a ring-shaped valve top part (28) and a ring-shaped valve bottom part (29), between which a valve inner space (34) remains and which are arranged coaxially to the piston rod (2), wherein the valve bottom part (29) has outer circumferential surfaces (33) that seal the extension chamber (5) relative to the gas pressure chamber (9), and the valve top part (28) has outer and inner circumferential surfaces that seal the gas pressure chamber (9) relative to an outside environment.

6. Vibration damper according to claim 5, **characterised in that** the valve bottom part (29) toward the extension chamber (5) comprises a bounding surface (25) that slopes downwardly oriented outwardly, and that forms a gas collecting space (25) coaxially relative to the piston rod (2) in the extension chamber (5), wherein the valve bottom part (29) consists of a slidable metal and forms a narrow throttle gap coaxially to the piston rod.

7. Vibration damper according to claim 5 or 6, **characterised in that** the valve top part (28) comprises a downwardly oriented ring-shaped elastic seal lip (30), which at least in a pressureless condition lies in contact in a sealing manner on a horizontal annular ring surface (32) of the valve bottom part (29), and at least one bored connection hole (31) is arranged in the valve bottom part (29) between the gas pressure chamber (9) and the valve inner space (34).

8. Vibration damper according to one of the preceding claims, **characterised in that** the electrode tube (7) on an outer circumferential surface thereof comprises an insulating lacquer layer (35) or an insulating coating, which is embodied to shield an electrical field toward the outside.

9. Vibration damper according to one of the preceding claims, **characterised in that** a high voltage electronic circuit (37) is arranged on the outer tube (8) and is connected electrically and in a pressure-tight manner with the electrode tube (7), and is connected electrically with the outer tube (8), and wherein a high voltage thereof is controlled by a program-controlled electronic circuit (38).

10. Vibration damper according to claim 9, **characterised in that** the electronic circuit (38) is configured to detect a standstill time, a temperature of the electrorheological fluid, and a piston rod travel that was traversed by the piston rod (2) after a standstill, and therefrom to calculate and control an increasing high voltage that is prescribed according to a characteristic curve progression, through which a voltage arc between the electrode tube (7) and the inner pressure medium cylinder (1) is preventable.

11. Vibration damper according to claim 9 or 10, **characterised in that** the electronic circuit (38) is further configured to detect an actual value of a current rise after the standstill time, and to compare the actual value with a prescribed nominal value progression, and upon exceeding a prescribed limit value to reduce the high voltage so far until the actual value follows the nominal value progression.

## Revendications

1. Amortisseur de vibrations pour l'amortissement de forces de rabattement et/ou de débattement sur des véhicules automobiles, qui contient un vérin intérieur à fluide sous pression (1), dans lequel un piston (2) avec une tige de piston (3) est agencé axialement coulissant, qui divise le vérin intérieur à fluide sous pression (1) en une chambre de rétraction (4) et une chambre de déploiement (5), dans lesquelles un liquide électrorhéologique est contenu en tant que fluide sous pression, dans lequel la chambre de rétraction (4) et la chambre de déploiement (5) sont reliées par au moins une fente d'étranglement (6) entre le tube intérieur de vérin (1) et un tube d'électrode (7) agencé coaxialement à celui-ci et que le tube d'électrode (7) est entouré coaxialement par un autre tube extérieur (8) distant, qui forme avec le tube d'électrode (7) une chambre de gaz sous pression (9), qui est reliée à la chambre de rétraction (4) par le biais d'une soupape de fond (10), **caractérisé en ce qu'**au moins deux moyens d'étanchéité (11) axialement linéaires ou hélicoïdaux sont agencés entre le tube intérieur de vérin (1) et le tube d'électrode (7), qui divisent la fente d'étranglement (6) en au moins deux fentes partielles de soupape (12, 13) similaires et qu'un premier clapet anti-retour étranglé (14) s'ouvrant vers la chambre de gaz sous pression (9) est agencé entre la chambre de déploiement (5) et la chambre de gaz sous pression (9).

2. Amortisseur de vibrations selon la revendication 1, **caractérisé en ce que** le tube intérieur de vérin (1) est fermé à l'extrémité de la chambre de rétraction (4) par un couvercle intérieur de vérin (16) et que la soupape de fond (10) est réalisée en tant que troisième clapet anti-retour s'ouvrant vers la chambre de rétraction (4).

3. Amortisseur de vibrations selon la revendication 1 ou 2, **caractérisé en ce que** le moyen d'étanchéité (11) est fixé dans au moins deux rainures (21) ou fentes hélicoïdales au niveau de la surface d'enveloppe intérieure du tube d'électrode (7) et se compose d'un élastomère en relief en un matériau de caoutchouc ou plastique et forme au moins une première étanchéité de fente (22) et une deuxième étanchéité de fente (23) entre le tube d'électrode (7) et le tube intérieur de vérin (1).

4. Amortisseur de vibrations selon l'une quelconque des revendications précédentes, **caractérisé en ce qu'**un deuxième clapet anti-retour (24) s'ouvrant vers la chambre de déploiement (5) est agencé entre la chambre de déploiement (5) et la chambre de rétraction (4).

5. Amortisseur de vibrations selon l'une quelconque des revendications précédentes, **caractérisé en ce que** le premier clapet anti-retour étranglé (14) est agencé dans la zone d'un couvercle de vérin supérieur (27) et se compose d'une partie supérieure de soupape annulaire (28) et d'une partie inférieure de soupape annulaire (29), entre lesquelles un espace intérieur de soupape (34) est laissé et qui sont agencées coaxialement à la tige de piston (2), dans lequel la partie inférieure de soupape (29), par ses surfaces d'enveloppe extérieures (33), étanchéifie la chambre de déploiement (5) par rapport à la chambre de gaz sous pression (9) et la partie supérieure de soupape (28), par ses surfaces d'enveloppe extérieures et intérieures, étanchéifie la chambre de gaz sous pression (9) vers l'extérieur.

6. Amortisseur de vibrations selon la revendication 5, **caractérisé en ce que** la partie inférieure de soupape (29) présente par rapport à la chambre de déploiement (5), une surface de délimitation (25) oblique descendante dirigée vers l'extérieur, qui forme coaxialement à la tige de piston (2) un espace collecteur de gaz (25) dans la chambre de déploiement (5), dans lequel la partie inférieure de soupape se compose d'un métal apte au glissement et forme une fente d'étranglement étroite coaxialement à la tige de piston (3).

7. Amortisseur de vibrations selon la revendication 5 ou 6, **caractérisé en ce que** la partie supérieure de soupape (28) présente une lèvre d'étanchéité élastique annulaire dirigée vers le bas (30), qui repose de manière étanche au moins à l'état hors pression sur une surface annulaire horizontale (32) de la partie inférieure de soupape (29) et qu'au moins un perçage de liaison (31) est agencé dans la partie inférieure de soupape (29) entre la chambre de gaz sous pression (9) et l'espace intérieur de soupape (34).

8. Amortisseur de vibrations selon l'une quelconque des revendications précédentes, **caractérisé en ce que** le tube d'électrode (7) présente sur sa surface d'enveloppe extérieure, une couche de vernis isolante (35) ou un revêtement d'isolation, qui est réalisée de sorte qu'elle blinde le champ électrique vers l'extérieur.

9. Amortisseur de vibrations selon l'une quelconque des revendications précédentes, **caractérisé en ce qu'**un circuit électronique haute tension (37), qui est relié étanche à la pression et électriquement au tube d'électrode (7) et électriquement au tube extérieur (8) et dont la haute tension est commandée par un circuit électronique commandé par programme (38), est agencé au niveau du tube extérieur (8).

10. Amortisseur de vibrations selon la revendication 9, **caractérisé en ce que** le circuit électronique (38) est réalisé de sorte qu'il détecte un temps d'arrêt, la température du liquide électrorhéologique et la distance de tige de piston parcourue après l'arrêt et calcule à partir de là et commande une haute tension croissante prédéfinie selon une courbe caractéristique, par laquelle une décharge de tension entre le tube d'électrode (7) et le tube intérieur de vérin (1) peut être empêchée.

11. Amortisseur de vibrations selon la revendication 9 ou 10, **caractérisé en ce que** le circuit électronique (38) détecte après le temps d'arrêt la valeur réelle de l'augmentation de courant et la compare avec une courbe de valeur de consigne prédéfinie et en cas de dépassement d'une valeur limite prédéfinie, la haute tension est réduite jusqu'à ce que la valeur réelle suive la courbe de valeur de consigne.
